Europäisches Patentamt

European Patent Office

Office européen des brevets

(11) Veröffentlichungsnummer: **0 231 809 B1**

# EUROPÄISCHE PATENTSCHRIFT

(45) Veröffentlichungstag der Patentschrift: **03.06.92**

(51) Int. Cl.⁵: **H04M 9/02**, H04Q 11/04, H04M 3/42

(21) Anmeldenummer: **87100737.3**

(22) Anmeldetag: **20.01.87**

(54) **Verfahren zur Integration eines oder mehrerer Zusatzfunktionsmodule in Fernmeldeanlagen sowie Zugriffsschaltung zur Durchführung des Verfahrens.**

(30) Priorität: **31.01.86 DE 3603013**

(43) Veröffentlichungstag der Anmeldung:
**12.08.87 Patentblatt 87/33**

(45) Bekanntmachung des Hinweises auf die
Patenterteilung:
**03.06.92 Patentblatt 92/23**

(84) Benannte Vertragsstaaten:
**AT BE CH DE ES FR GB IT LI LU NL SE**

(56) Entgegenhaltungen:
**US-A- 3 937 892**

**ERICSSON REVIEW, Band 60, Nr. 4, 1983, Seiten 214-221, Stockholm, SE; L. SKOOG et al.: "ERICOM DIRECT"**

**ARCHIV FÜR ELEKTRONIK UND ÜBERTRA-GUNGSTECHNIK, Band 27, Nr. 4, 1973, Seiten 168-176, S. HIRZEL VERLAG, Stuttgart, DE; K.D. SCHENKEL: "Entwurf eines integrierten digitalen Nachrichtensystems mit Vielfach-zugriff für ein beliebig verzweigtes Breit-bandnetz"**

(73) Patentinhaber: **Siemens Nixdorf Informations-systeme Aktiengesellschaft**
**Fürstenallee 7**
**W-4790 Paderborn(DE)**

(72) Erfinder: **Lubcke, Hartmut**
**Hudeweg 30**
**W-4790 Paderborn(DE)**
Erfinder: **Backhaus, Martin**
**D. Bonhoefferstrasse 33**
**W-4790 Paderborn(DE)**
Erfinder: **Schreiber, Harald**
**Strandasternweg 7**
**W-4796 Salzkotten(DE)**

## Beschreibung

Die Erfindung betrifft ein Verfahren zur Integration eines oder mehrerer Zusatzfunktionsmodule in Fernmeldeanlagen, insbesondere in digitale Fernsprechnebenstellenanlagen, bei denen die Vermittlung zwischen zwei Teilnehmerendgeräten nach dem Zeitmultiplexprinzip durch Zuteilung eines Zeitschlitzpaares durch eine zentrale Vermittlungseinheit erfolgt.

Mit der Einführung von digitalen Teilnehmerendgeräten wie z.B. digitalen Telefonen in digitalen Fernsprechnebenstellenanlagen können den Teilnehmern Zusatzfunktionen bereitgestellt werden, die bei den bisher üblichen analog arbeitenden Telefonen nicht zu realisieren waren. Zu solchen Zusatzfunktionen zählen Dienstleistungen wie beispielsweise ein nach Namen und nach Nummern geordnetes Telefonbuch, Funktionen wie Anruferidentifikation und Namenwahl, Senden von Kurznachrichten von einem Teilnehmer zum anderen oder Weckerfunktionen zur Erinnerung an Termine.

Diese Zusatzfunktionen stehen nicht in unmittelbarem Zusammenhang mit der Vermittlung und sollen daher auch nicht von der Vermittlungseinheit selbst erbracht werden. Sie sollen vielmehr zweckmäßigerweise durch einen oder mehrere Zusatzfunktionsmodule übernommen werden, die mit den Teilnehmerendgeräten kommunizieren können müssen.

Wie eine solche Kommunikation zwischen dem bzw. den Zusatzfunktionsmodulen und den Teilnehmerendgeräten realisiert werden soll, ist bisher jedoch nicht bekannt. Sie könnte beispielsweise über Sonderleitungen von dem bzw. den Zusatzfunktionsmodulen zu jedem Teilnehmerendgerät stattfinden. Dazu wäre allerdings durch den hohen durch die Sonderleitungen bedingten schaltungstechnischen Aufwand ein hoher Kostenaufwand erforderlich. Ein weiterer Nachteil einer solchen Kommunikation über Sonderleitungen wäre, daß eine bestehende digitale Fernmeldeanlage nicht bzw. nur mit einem unwirtschaftlich hohen Kostenaufwand mit Zusatzfunktionsmodulen nachgerüstet werden könnte.

Als weitere Möglichkeit könnte die Kommunikation des bzw. der Zusatzfunktionsmodule mit den Teilnehmerendgeräten in derselben Weise wie die Vermittlung zwischen zwei Teilnehmerendgeräten, nämlich durch Zuteilung eines Zeitschlitzpaares durch die zentrale Vermittlungseinheit erfolgen. Diese Lösungsmöglichkeit hätte zwar gegenüber der beschriebenen ersten Lösungsvariante den Vorteil, daß bereits installierte Fernmeldeanlagen nachgerüstet werden könnten. Ihr Nachteil bestünde aber darin, daß die für die Vermittlung zweier Teilnehmerendgeräte vorgesehene Vermittlungseinheit zusätzlich belastet werden würde. Dies ist jedoch nicht erwünscht, da die Bereitstellung dieser Zusatzfunktionen nicht in unmittelbarem Zusammenhang mit der Vermittlung steht.

Es ist daher Aufgabe der Erfindung, eine Möglichkeit zur Kommunikation eines oder mehrerer Zusatzfunktionsmodule mit den Teilnehmerendgeräten anzugeben, die mit nur geringem schaltungstechnischen Aufwand realisiert werden kann und durch die die Vermittlungseinheit nicht zusätzlich belastet wird.

Diese Aufgabe wird für ein Verfahren eingangs genannter Art erfindungsgemäß dadurch gelöst, daß zur Kommunikation des bzw. der Zusatzfunktionsmodule mit den Teilnehmerendgeräten auf mindestens einen bestimmten fest reservierten Zeitschlitz zugegriffen wird.

Die Verwendung mindestens eines bestimmten fest reservierten Zeitschlitzes zur Kommunikation des bzw. der Zusatzfunktionsmodule mit den Teilnehmerendgeräten hat den Vorteil, daß innerhalb der digitalen Fernmeldeanlage ein oder mehrere Nachrichten- oder Datenkanäle geschaffen werden, die die zentrale Vermittlungseinheit nicht beanspruchen und zudem die Vermittlungskapazität der digitalen Fernmeldeanlage nur unwesentlich beeinflussen. Da ferner zur Durchführung des erfindungsgemäßen Verfahrens keine separaten Leitungen zwischen dem bzw. den Zusatzfunktionsmodulen und den Teilnehmerendgeräten erforderlich sind, können selbst mehrere Zusatzfunktionsmodule in einfacher Weise kostengünstig in bestehende Fernmeldeanlagen wie beispielsweise digitale Fernsprechnebenstellenanlagen integriert werden.

Da die durch Reservierung eines Zeitschlitzes bereitgestellte Datenrate von üblicherweise 64 Kilobit pro Sekunde für die Kommunikation zwischen einem Zusatzfunktionsmodul und den Teilnehmerendgeräten weit überdimensioniert ist, kann diese Kanalkapazität weiter unterteilt werden. Dies erfolgt in einer Weiterbildung der Erfindung dadurch, daß zur Kommunikation mehrerer Zusatzfunktionsmodule mit den Teilnehmerendgeräten jeweils nur ein bestimmter Teil der Gesamtkanalkapazität des bzw. eines der reservierten Zeitschlitze ausgewählt wird.

Vorteilhaft wird dabei bei Verwendung eines aus n, insbesondere acht parallelen Leitungen bestehenden Datenbus für jede Übertragungsrichtung jeweils eines der n parallel vorgesehenen Bits eines während eines Zeitschlitzes auftretenden Datenwortes ausgewählt.

In einer Weiterbildung des erfindungsgemäßen Verfahrens werden der bzw. die reservierten Zeitschlitze dem bzw. den Zusatzfunktionsmodulen und den Teilnehmerendgeräten während der Initialisierungsphase der Fernmeldeanlage durch Übermittlung der jeweiligen Zeitschlitznummer zugeteilt.

Auf diese Weise werden die Zusatzfunktionsmodule und die Teilnehmerendgeräte nur einmal voreingestellt, so daß während der eigentlichen Vermittlung keinerlei Steuerleistung erforderlich ist.

Ebenso wie die Zeitschlitznummer können dann die einzelnen Teile der Gesamtkanalkapazität des bzw. eines der reservierten Zeitschlitze den Zusatzfunktionsmodulen und Teilnehmerendgeräten während der Initalisierungsphase der Fernmeldeanlage zugeteilt werden. Dabei erfolgt die Zuteilung eines bestimmten Bits eines während eines Zeitschlitzes auftretenden n-Bit-Datenwortes vorteilhaft durch Übermittlung der betreffenden Bitnummer.

Die für die Zusatzfunktionsmodule und Teilnehmerendgeräte jeweils vorgesehene Zeitschlitznummer und ggf. auch Bitnummer können in den betreffenden Modulen und Geräten auch fest eingestellt bzw. durch Kodierschalter manuell einstellbar sein.

In einer Weiterbildung der Erfindung erfolgt der Zugriff des bzw. der Zusatzfunktionsmodule und der Teilnehmerendgeräte auf den bzw. einen der fest reservierten Zeitschlitze durch Dekodieren desselben. Diese Art des Zeitschlitzzugriffs zeichnet sich dadurch aus, daß keinerlei Vermittlungsleistung durch die zentrale Vermittlungseinheit erforderlich ist.

In dieser Ausbildung der Erfindung wird das Dekodieren des bzw. eines der fest reservierten Zeitschlitze durch die übermittelte bzw. voreingestellte Zeitschlitznummer gesteuert. Dies erfolgt vorteilhaft dadurch, daß zum Dekodieren die Übereinstimmung der jeweils aktuellen Zeitschlitznummer mit der übermittelten bzw. voreingestellten Zeitschlitznummer festgestellt wird. Dazu kann die jeweils aktuelle Zeitschlitznummer in einer vorteilhaften Weiterbildung des erfindungsgemäßen Verfahrens durch Zählen der Empfangs- bzw. Sendetakte des jeweils aktuellen Impulsrahmens ermittelt werden, wobei unter Impulsrahmen der Zeitraum vom Auftreten eines Zeitschlitzes z.B. mit der Nummer 0 bis zum Auftreten des unmittelbar darauf folgenden Zeitschlitzes mit der Nummer 0 zu verstehen ist.

Das vorstehend erläuterte Verfahren ermöglicht es also, einen oder auch mehrere voneinander unabhängige Datenwege zwischen dem bzw. den Zusatzfunktionsmodulen und den Teilnehmerendgeräten zu schaffen. Für den Fall, daß die zentrale Vermittlungseinheit nach dem sog. WIRED-OR-Prinzip aufgebaut ist, können für die Steuerung des Zugriffs auf diese Datenwege Verfahren für sog. Multipoint-Verbindungen wie z.B. CSMA- oder Poll-Verfahren zum Einsatz kommen. Solche Verfahren ermöglichen die besonders effektive Nutzung der einzelnen Datenwege durch jeweils mehrere Teilnehmer.

Der Informationsaustausch zwischen der am öffentlichen Fernsprechteilnehmernetz angeschlossenen Teilnehmerschaltung und den mit dieser verbundenen Teilnehmerendgeräten kann beispielsweise nach ISDN-Konvention in sog. D-Kanälen erfolgen.

Eine Zugriffsschaltung für Sende- und Empfangsbetrieb zur Durchführung des vorstehend beschriebenen Verfahrens ist in weiterer Ausbildung des Erfindungsgedankens so aufgebaut, daß zum Dekodieren des bzw. eines der reservierten Zeitschlitze ein programmierbarer Zähler vorgesehen ist, der einen Vergleicher enthält, dessen Eingänge mit den Ausgängen eines Speicherregisters für die übermittelte Zeitschlitznummer und eines Zählers verbunden sind, welcher durch die Sende- bzw. Empfangstakte des jeweils aktuellen Impulsrahmens inkrementiert wird, wobei ein erstes konjunktives Verknüpfungsglied vorgesehen ist, an dessen Eingängen der Sendetakt und das Vergleicherausgangssignal anliegen und an dessen Ausgang das Senderfreigabesignal erscheint. Auf diese Weise wird das Senderfreigabesignal immer dann erzeugt, wenn einerseits die übermittelte bzw. voreingestellte Zeitschlitznummer mit der gerade aktuellen Zeitschlitznummer übereinstimmt und wenn andererseits gerade ein Sendetakt auftritt.

Bei einer derart aufgebauten Zugriffsschaltung wird der Rücksetzeingang des Zählers vorteilhaft vom Sende- bzw. Empfangssynchronisationssignal der Fernmeldeanlage angesteuert.

In einer weiteren Ausbildung der Zugriffsschaltung ist zur Auswahl bzw. Zuteilung eines bestimmten Bits eines während eines Zeitschlitzes auftretenden n-Bit-Datenwortes ein von der übermittelten Bitnummer steuerbarer 1-aus-n-Selektor vorgesehen. Mit einem solchen 1-aus-n-Selektor kann die Gesamtkanalkapazität eines Zeitschlitzes in einfacher Weise in n Teilkanalkapazitäten unterteilt werden. Dabei ist ein zweites konjunktives Verknüpfungsglied vorgesehen, dessen Eingänge vom Vergleicherausgangssigal und von den Sendedaten angesteuert werden und dessen Ausgang mit dem 1-aus-n-Selektor verbunden ist. Durch dieses zweite konjunktive Verknüpfungsglied wird bewirkt, daß die zu sendenden Daten jeweils bei Übereinstimmung der Übermittelten Zeitschlitznummer mit der aktuellen Zeitschlitznummer auf die durch die Übermittelte Bitnummer ausgewählte Übertragungsleitung für Sendebetrieb geschaltet wird.

In einer anderen Ausbildung der Zugriffsschaltung, nämlich für Empfangsbetrieb, ist ein drittes konjunktives Verknüpfungsglied vorgesehen, an dessen Eingängen der Empfangs takt und das Vergleicherausgangssignal anliegen und an dessen Ausgang das Empfängerfreigabesignal erscheint. Ein solches wird immer dann erzeugt, wenn einerseits die übermittelte bzw. voreingestellte Zeitschlitznummer mit der aktuellen Zeitschlitznummer übereinstimmt und wenn andererseits gerade ein Empfangstakt auftritt.

In einer Weiterbildung der Zugriffsschaltung für Empfangsbetrieb ist ein viertes konjunktives Verknüpfungsglied vorgesehen, dessen Eingänge mit den Ausgängen des Vergleichers und des 1-aus-n-Selektors verbunden sind und an dessen Ausgang die Empfangsdaten erscheinen. Durch diese Verknüpfung wird bewirkt, daß die durch die übermittelte bzw. voreingestellte Bitnummer vorgegebene Bitstelle eines in einem Zeitschlitz übertragenen Datenwortes ausgelesen wird, wenn die aktuelle Zeitschlitznummer mit der ebenfalls übermittelten bzw. voreingestellten Zeitschlitznummer übereinstimmt.

Im folgenden wird die Erfindung anhand eines Ausführungsbeispiels erläutert. Es zeigen:

Fig. 1 ein Blockschaltbild einer digitalen Fernmeldeanlage,

Fig. 2 ein Blockschaltbild eines digitalen Einschubs und

Fig. 3 ein Blockschaltbild je einer Zugriffsschaltung für Sende- und Empfangsbetrieb.

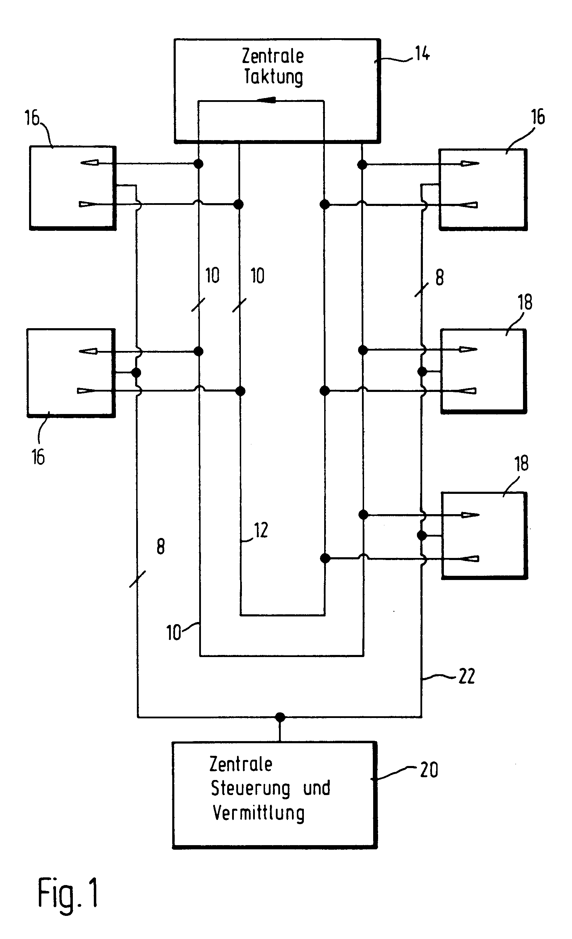

Im folgenden soll zunächst anhand des Blockschaltbildes von Fig. 1 der Aufbau und die prinzipielle Funktion einer nach dem Zeitmultiplexprinzip arbeitenden digitalen Fernmeldeanlage beschrieben werden. Bei einer solchen digitalen Fernmeldeanlage sind als Übertragungsleitung ein zehnadriger Sendebus 10 und ein davon unabhängiger, ebenfalls zehnadriger Empfangsbus 12 vorgesehen. Sowohl beim Sendebus 10 als auch beim Empfangsbus 12 dienen acht Adern zur Datenübertragung und je eine Ader zur Übertragung der Synchronisationsimpulse und des Taktes. Die Synchronisationsimpulse und Takte sowohl des Sendebus 10 als auch des Empfangsbus 12 werden durch eine zentrale Takteinheit 14 erzeugt.

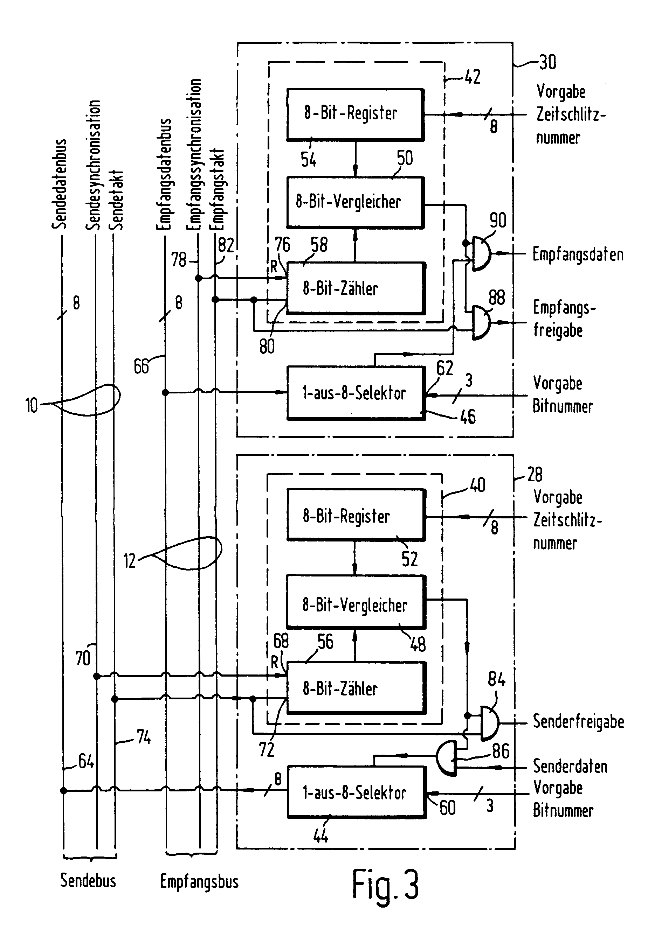

An den Sendebus 10 und an den Empfangsbus 12 sind digitale Einschübe in Form von Teilnehmerendgeräten 16 und digitalen Zusatzfunktionsmodulen 18 angeschlossen. Diese digitalen Einschübe 16, 18 werden von einer zentralen Steuerungs- und Vermittlungseinheit 20 über einen parallelen bzw. seriellen Steuerbus 22 gesteuert. Diese zentrale Steuerungs- und Vermittlungseinheit 20 steuert einerseits die Vermittlung zwischen zwei Teilnehmerendgeräten 16 durch Zuteilung eines Zeitschlitzpaares und andererseits die in den digitalen Einschüben 16 und 18 enthaltenen Zugriffsschaltungen (siehe Fig. 3), die die Kommunikation zwischen Teilnehmerendgeräten 16 und Zusatzfunktionsmodulen 18 ermöglichen, ohne dabei die zentrale Steuerungs- und Vermittlungseinheit 20 zu belasten.

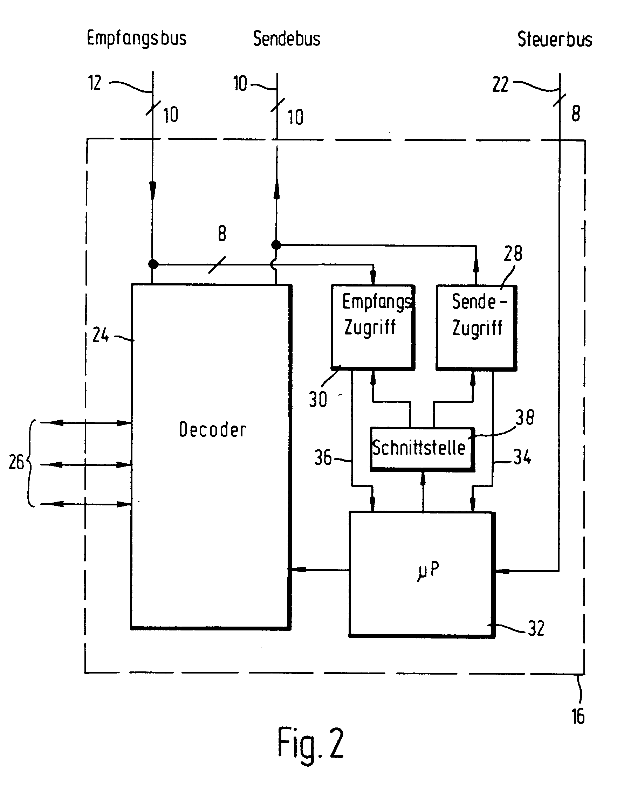

Der prinzipielle Aufbau eines digitalen Einschubs 16, 18 soll anhand des Blockschaltbildes von Fig. 2 erläutert werden, das ein digitales Teilnehmerendgerät zeigt. Der Sendebus 10 und der Empfangsbus 12 sind mit einem Dekoder 24 für Sende- und Empfangszeitschlitze für Teilnehmeranschlüsse 26 verbunden. Der Sendebus 10 ist ferner mit einer Zugriffsschaltung 28 für Sendebetrieb verbunden. Analog dazu ist der Empfangsbus 12 ferner mit einer Zugriffsschaltung 30 für Empfangsbetrieb verbunden. Die beiden Zugriffsschaltungen 28 und 30 dienen zum Dekodieren der für die Kommunikation des bzw. der Zusatzfunktionsmodule 18 (Fig. 1) mit den Teilnehmerendgeräten 16 (Fig. 1) vorgesehenen fest reservierten Zeitschlitze. Sowohl der Dekoder 24 für Sende- und Empfangszeitschlitze für Teilnehmeranschlüsse 26 als auch die beiden Zugriffsschaltungen 28 und 30 werden durch ein Mikroprozessorsystem 32 gesteuert, das seinerseits an den Steuerbus 22 angeschlossen ist. Der Datenaustausch zwischen den beiden Zugriffsschaltungen 28, 30 und dem Mikroprozessorsystem 32 erfolgt einerseits über Verbindungsleitungen 34 und 36 direkt und andererseits über eine Schnittstelle 38. Das vorstehend beschriebene Teilnehmerendgerät unterscheidet sich im Aufbau von einem digitalen Zusatzfunktionsmodul im wesentlichen dadurch, daß beim digitalen Zusatzfunktionsmodul der Dekoder 24 für Sende- und Empfangszeitschlitze für Teilnehmeranschlüsse 26 nicht vorhanden ist.

Im folgenden sollen anhand von Fig. 3 der schaltungstechnische Aufbau und die Funktion der in Fig. 3 als Blöcke 28 und 30 dargestellten Zugriffsschaltungen für Sendebetrieb und für Empfangsbetrieb näher erläutert werden.

In der oberen Hälfte der Fig. 3 ist die Zugriffsschaltung 30 für Empfangsbetrieb dargestellt. Sie ist mit einer Strich-Punkt-Strich-Linie umrahmt. Ebenfalls mit einer Strich-Punkt-Strich-Linie umrahmt ist in der unteren Hälfte der Fig. 3 die Zugriffsschaltung 28 für Sendebetrieb dargestellt.

Da die Zugriffsschaltung 28 für Sendebetrieb nahezu identisch aufgebaut ist wie die Zugriffsschaltung 30 für Empfangsbetrieb, sollen beide zusammen erläutert werden. Beide Zugriffsschaltungen 28 und 30 enthalten einen programmierbaren Zähler 40 bzw. 42 (gestrichelt eingezeichnet) und einen 1-aus-8-Selektor 44 bzw. 46. Die programmierbaren Zähler 40 und 42 beinhalten jeweils einen 8-Bit-Vergleicher 48 bzw. 50, dessen Eingänge jeweils mit den Ausgängen eines 8-Bit-Speicherregisters 52 bzw. 54 und eines 8-Bit-Zählers 56 bzw. 58 verbunden sind. Die Eingänge der 8-Bit-Speicherregister 52 bzw. 54 sind über das Mikroprozessorsystem 32 (Fig. 2) mit dem Steuerbus 22 (Fig. 2) verbunden, über den sie die Zeitschlitznummer des bzw. eines der reservierten Zeitschlitze erhalten. Ferner sind die Steuereingänge 60 bzw. 62 der 1-aus-8-Selektoren 44 bzw. 46 über das Mikroprozessorsystem 32 (Fig. 2) mit dem Steuerbus 22 (Fig. 2) verbunden. Über diesen können die 1-aus-8-Selektoren 44 bzw. 46 mit der vorgegebenen Bitnummer eingestellt werden. Der Ausgang des 1-aus-8-Selektors 44 ist über eine 8-Bit-Leitung mit dem 8 Bit breiten Sendedatenbus 64 verbunden. Analog dazu ist der 1-aus-8-Selektor 46 mit seinem 8-Bit-Eingang mit dem ebenfalls 8 Bit breiten Empfangsdatenbus 66 verbunden. Während der 8-Bit-Zähler 56 der Zugriffsschaltung 28 für Sendebetrieb mit seinem Rücksetzeingang 68 an die Sendesynchronisationsleitung 70 und mit seinem Zähleingang 72 an die Sendetaktleitung 74 angeschlossen ist, ist der 8-Bit-Zähler 58 der Zugriffsschaltung 30 für Empfangsbetrieb mit seinem Rücksetzeingang 76 an die Empfangssynchronisationsleitung 78 und mit seinem Zähleingang 80 an die Empfangstaktleitung 82 angeschlossen.

Zur Bildung des Senderfreigabesignals ist ein erstes UND-Glied 84 mit seinen beiden Eingängen an die Sendetaktleitung 74 und an den Ausgang des Vergleichers 48 angeschlossen. Ein zweites UND-Glied 86, das mit seinem Ausgang an den 1-aus-8-Selektor 44 angeschlossen ist, ist ferner mit einem Eingang an den Ausgang des 8-Bit-Vergleichers 48 angeschlossen. Sein zweiter Eingang wird mit den Sendedaten angesteuert.

Analog zum Senderfreigabesignal wird das Empfängerfreigabesignal durch UND-Verknüpfung des Empfangstaktes mit dem Gleichheitssignal des 8-Bit-Vergleichers 50 gebildet. Dazu ist ein drittes UND-Glied 88 vorgesehen, das mit einem Eingang an den Ausgang des 8-Bit-Vergleichers 50 angeschlossen ist und das mit seinem anderen Eingang mit der Empfangstaktleitung 82 verbunden ist. Zur Bildung der Empfangsdaten ist ein viertes UND-Glied 90 mit seinem einen Eingang mit dem Ausgang des Vergleichers 50 und mit seinem anderen Eingang mit dem Ausgang des 1-aus-8-Selektors 46 verbunden.

Nachdem vorstehend der Aufbau der Zugriffsschaltungen 28, 30 für Sende- und Empfangsbetrieb beschrieben wurde, soll nun im folgenden noch deren Funktion erläutert werden. Während der Initialisierungsphase der digitalen Fernmeldeanlage wird allen digitalen Einschüben, also den Teilnehmerendgeräten 16 (Fig.1) und den Zusatzfunktionsmodulen 18 (Fig.1), von der zentralen Steuerungs- und Vermittlungseinheit 20 (Fig.1) über den Steuerbus 22 die Zeitschlitznummer bzw. -nummern des bzw. der für die Zusatzfunktionen reservierten Zeitschlitze sowie des bzw. der Bits innerhalb des Zeitschlitzes bzw. der Zeitschlitze mitgeteilt. Diese Information wird durch das Mikroprozessorsystem 32 (Fig. 2) aufbereitet. Die aufbereitete Information ist in der Fig. 3 mit "Vorgabe-Zeitschlitznummer" und "Vorgabe-Bitnummer" bezeichnet.

In der Zugriffsschaltung 28 für Sendebetrieb wird die übermittelte Zeitschlitznummer in das 8-Bit-Register 52 übernommen und abgespeichert. Der 8-Bit-Zähler 56 zählt den über den Empfangsbus 10 zugeführten Sendetakt. In dem 8-Bit-Vergleicher 48 wird der Inhalt des 8-Bit-Speicherregisters 52 mit dem Stand des Zählers 56 verglichen. Bei Übereinstimmung gibt der Vergleicher 48 an seinem Ausgang ein Signal ab, das im UND-Glied 84 zur Bildung des Senderfreigabesignals mit dem Sendetakt verknüpft wird. Bei vorliegendem Senderfreigabesignal werden die zu sendenden Daten in dem UND-Glied 86 mit dem Gleichheitssignal am Ausgang des Vergleichers 48 verknüpft und dann dem 1-aus-8-Selektor 44 zugeführt. Dieser schaltet die zu sendenden Daten auf die über die "Vorgabe-Bitnummer" ausgewählte Sendedatenbusleitung des Sendedatenbus 64.

Bei der Zugriffsschaltung 30 für Empfangsbetrieb wird das Empfängerfreigabesignal analog zum Senderfreigabesignal bei der Zugriffsschaltung 28 für Sendebetrieb durch Verknüpfung des Ausgangssignals des 8-Bit-Vergleichers 50 mit dem Empfangstakt durch das UND-Glied 88 gebildet.

Die Empfangsdaten werden zunächst vom 8 Bit breiten Empfangsdatenbus 66 dem 1-aus-8-Selektor 46 zugeführt. Von den 8 Bit breiten Datenwörtern wird über die 3 Bit breite "Vorgabe-Bitnummer" ein Bit ausgewählt. Auf die gewünschte Bitstelle des gewünschten Zeitschlitzes wird dadurch zugegriffen, daß das Ausgangssignal des 1-aus-8-Selektors 46 durch das UND-Glied 90 mit dem Ausgangssignal des Vergleichers 50 verknüpft wird.

**Patentansprüche**

1. Verfahren zur Integration eines oder mehrerer Zusatzfunktionsmodule (18) in Fernmeldeanlagen, insbesondere in digitale Fernsprechnebenstellenanlagen, bei denen die Vermittlung zwischen zwei Teilnehmerendgeräten (16) nach dem Zeitmultiplexprinzip durch Zuteilung eines Zeitschlitzpaares durch eine zentrale Vermittlungseinheit (20) erfolgt, dadurch **gekennzeichnet**, daß zur Kommunikation des bzw. der Zusatzfunktionsmodule (l8) mit den Teilnehmerendgeräten (l6) auf mindestens einen bestimmten fest reservierten Zeitschlitz zugegriffen wird.

2. Verfahren nach Anspruch I, dadurch **gekennzeichnet**, daß zur Kommunikation mehrerer Zusatzfunktionsmodule (l8) mit den Teilnehmerendgeräten (l6) jeweils nur ein bestimmter Teil der Gesamtkanalkapazität des bzw. eines der reservierten Zeitschlitze ausgewählt wird.

**3.** Verfahren nach Anspruch 2, dadurch **gekennzeichnet**, daß bei Verwendung eines aus n, insbesondere acht, parallelen Leitungen bestehenden Datenbus (64, 66) für jede Üubertragungsrichtung jeweils eines der n parallel vorgesehenen Bits eines während eines Zeitschlitzes auftretenden Datenwortes ausgewählt wird.

**4.** Verfahren nach einem der vorhergehenden Ansprüche, dadurch **gekennzeichnet**, daß der bzw. die reservierten Zeitschlitze dem bzw. den Zusatzfunktionsmodulen (l8) und den Teilnehmerendgeräten (l6) während der Initialisierungsphase der Fernmeldeanlage durch Übermittlung der jeweiligen Zeitschlitznummer zugeteilt werden und daß ggf. die einzelnen Teile der Gesamtkanalkapazität des bzw. wenigstens eines der reservierten Zeitschlitze den Zusatzfunktionsmodulen (l8) und Teilnehmerendgeräten (l6) während der Initialisierungsphase der Fernmeldeanlage zugeteilt werden, wobei die Zuteilung eines bestimmten Bits eines während eines Zeitschlitzes auftretenden n-Bit-Datenwortes durch Übermittlung der betreffenden Bitnummer erfolgt.

**5.** Verfahren nach einem der vorhergehenden Ansprüche, dadurch **gekennzeichnet**, daß der Zugriff des bzw. der Zusatzfunktionsmodule (l8) und der Teilnehmerendgeräte (l6) auf den bzw. einen der fest reservierten Zeitschlitze durch Dekodieren desselben erfolgt, daß das Dekodieren des bzw. eines der fest reservierten Zeitschlitze durch die übermittelte Zeitschlitznummer gesteuert wird und daß zum Dekodieren die Übereinstimmung der jeweils aktuellen Zeitschlitznummer mit der übermittelten Zeitschlitznummer festgestellt wird.

**6.** Verfahren nach Anspruch 5, dadurch **gekennzeichnet**, daß die jeweils aktuelle Zeitschlitznummer durch Zählen der Empfangs- bzw. Sendetakte des jeweils aktuellen Impulsrahmens ermittelt wird.

**7.** Zugriffsschaltung für Sende- bzw. Empfangsbetrieb zur Durchführung eines Verfahrens zur Integration eines oder mehrerer Zusatzfunktionsmodule (18) in Fernmeldeanlagen, insbesondere in digitale Fernsprechnebenstellenanlagen, bei denen die Vermittlung zwischen zwei Teilnehmerendgeräten (16) nach dem Zeitmultipleseprinzip durch Zuteilung eines Zeitschlitzpaares durch eine zentrale Vermittlungseinheit (20) erfolgt, dadurch **gekennzeichnet,** daß zum Dekodieren des bzw. eines der reservierten Zeitschlitze ein programmierbarer Zähler (40, 42) vorgesehen ist, der einen Vergleicher (48, 50) enthält, dessen Eingänge mit den Ausgängen eines Speicherregisters (52, 54) für die übermittelte Zeitschlitznummer und eines Zählers (56, 58) verbunden sind, welcher durch die Sende- bzw. Empfangtakte des jeweils aktuellen Impulsrahmens inkrementiert wird, und daß ein erstes konjunktives Verknüpfungsglied (84) vorgesehen ist, an dessen Eingängen der Sendetakt und das Vergleicherausgangssignal anliegen und an dessen Ausgang das Senderfreigabesignal erscheint.

**8.** Zugriffsschaltung nach Anspruch 7, dadurch **gekennzeichnet,** daß der Rücksetzeingang (68, 76) des Zählers (56, 58) vom Sende- bzw. Empfangssynchronisationssignal der Fernmeldeanlage angesteuert wird.

**9.** Zugriffsschaltung nach Anspruch 7 oder 8, dadurch **gekennzeichnet,** daß zur Auswahl bzw. Zuteilung eines bestimmten Bits eines während eines Zeitschlitzes auftretenden n-Bit-Datenwortes ein von der übermittelten Bitnummer steuerbarer l-aus-n-Selektor (44, 46) vorgesehen ist, der mit dem Ausgang eines zweiten konjunktiven Verknüpfungsgliedes (86) verbunden ist, dessen Eingänge vom Vergleicherausgangssignal und von den Sendedaten angesteuert werden.

**10.** Zugriffsschaltung nach einem der Ansprüche 7 bis 9, **gekennzeichnet** durch ein drittes konjunktives Verknüpfungsglied (88), an dessen Eingängen der Empfangstakt und das Vergleicherausgangssignal anliegen und an dessen Ausgang das Empfängerfreigabesignal erscheint.

**11.** Zugriffsschaltung nach einem der Ansprüche 7 bis l0, **gekennzeichnet** durch ein viertes konjunktives Verknüpfungsglied (90), dessen Eingänge mit den Ausgängen des Vergleichers (50) und des l-aus-n-Selektors (46) verbunden sind und an dessen Ausgang die Empfangsdaten erscheinen.

**Claims**

**1.** A method of integrating one or several additional function modules (18) into telecommunications systems, in particular into digital telephone extension systems, in which exchange between two subscriber terminals (16) is achieved, according to the principle of time division multiplexing, by assigning a pair of time slots through a central exchange unit (20), **characterized** in that for communication of the additional function module, or modules (18), with the subscriber terminals (16), at least one particular fixedly reserved time slot is accessed.

2. A method according to claim 1, **characterized** in that for communication of several additional function modules (18) with the subscriber terminals (16), only a particular portion of the total channel capacity of the reserved time slots, or of one of the reserved time slots, respectively, is selected.

3. A method according to claim 2, **characterized** in that, when using a data bus (64, 66) consisting of n, in particular eight, parallel lines, for each direction of transmission, one of the n bits provided in parallel of a data word occurring during a time slot is selected.

4. A method according to any one of the foregoing claims **characterized** in that the reserved time slot or slots are assigned to the additional function module or modules (18) and the subscriber terminals (16) during the initializing phase of the telecommunications system by transmission of the respective time slot number, and that, if necessary, the individual portions of the total channel capacity of the or at least one of the reserved time slots are assigned to the additional function modules (18) and the subscriber terminals (16) during the initializing phase of the telecommunications system, wherein the assignment of a particular bit of an n-bit data word, occurring during a time slot, is performed by transmitting the respective bit number.

5. A method according to any one of the foregoing claims **characterized** in that the access of the additional function module (18), or modules, and the subscriber terminals (16) to the fixedly reserved time slots, or to one of the reserved time slots, is performed by decoding the same, that the decoding of said fixedly reserved time slot, or of one of the reserved time slots, is controlled by the transmitted time slot number, and that for decoding, coincidence of the current time slot number with the transmitted time slot number is detected.

6. A method according to claim 5, **characterized** in that the current time slot number is determined by counting the receive or transmit clock pulses of the current pulse frame.

7. An access circuit for transmit or receive operation to conduct a method of integrating one or several additional function modules (18) into telecommunications systems, in particular into digital telephone extension systems, in which exchange between two subscriber terminals (16) is achieved, according to the principle of time division multiplexing, by assigning a pair of time slots through a central exchange unit (20), **characterized** in that for decoding the reserved time slot, or one of the reserved time slots, a programmable counter (40, 42) is provided which contains a comparator (48, 50) whose inputs are connected to the outputs of a storage register (52, 54) for the transmitted time slot number and of a counter (56, 58) incremented by the transmit and receive clock pulses of the current pulse frame, and that a first conjunctive gate (84) is provided, at the inputs of which are provided the transmit clock pulse and the comparator output signal, and at the output of which appears the transmitter enabling signal.

8. An access circuit according to claim 7, **characterized** in that the reset input (68, 76) of the counter (56, 58) is activated by the transmit or receive synchronising signal of the telecommunications system.

9. An access circuit according to claim 7 or 8, **characterized** in that for selection or assignment of a particular bit of a n-bit-data word occurring during a time slot, a 1-out-of-n-selector (44, 46) controllable by the transmitted bit number is provided, which is connected to the output of a second conjunctive gate (86) whose inputs are activated by the comparator output signal and the transmit data.

10. An access circuit according to any one of claims 7 to 9, **characterized** by a third conjunctive gate (88) at whose inputs are provided the receive clock pulse and the comparator output signal, and at whose output appears the receiver enable signal.

11. An access circuit according to any one of claims 7 to 10, **characterized** by a fourth conjunctive gate (90), whose inputs are connected to the outputs of the comparator (50) and of the 1-out-of-n-selector (46), and at whose output the received data appear.

**Revendications**

1. Procédé d'intégration d'un ou de plusieurs modules (18) à fonctions supplémentaires dans des installations de télécommunication, en particulier dans des installations téléphoniques numériques annexes, selon lequel la communication entre deux postes terminaux d'abonnés (16) se fait selon le principe du multiplexage temporel par affectation d'une paire de tranches effectuée par une unité de communication centrale (20), caractérisé en ce que, pour établir la communication du ou des modules (18) à fonctions supplémentaires avec les postes terminaux d'abonnés (16), au moins une tranche de temps déterminée réservée de manière fixe est rendue accessible.

2. Procédé selon la revendication 1, caractérisé en ce que pour établir la communication de plusieurs modules (18) à fonctions supplémentaires avec les postes terminaux d'abonnés (16) seulement une fraction déterminée de la capacité totale des canaux de la ou des tranches de temps réservées est choisie respectivement.

3. Procédé selon la revendication 2, caractérisé en ce que, lors de l'emploi d'un bus de données (64, 66) constitué de n, en particulier huit, lignes parallèles, pour chaque sens de transmission est choisi respectivement un des n chiffres binaires en parallèle d'une zone de données qui apparaît au cours d'une tranche de temps.

4. Procédé selon l'une quelconque des revendications précédentes, caractérisé en ce que la ou les tranches de temps réservées sont affectés au module ou aux modules (18) à fonctions supplémentaires et aux postes terminaux d'abonnés (16) au cours de la phase de mise à l'état initial de l'installation de télécommunication par transmission du numéro respectif de la tranche de temps, et en ce qu'éventuellement les fractions individuelles de la capacité totale des canaux de la ou au moins de l'une des tranches de temps réservées sont affectées aux modules (18) à fonctions supplémentaires et aux postes terminaux d'abonnés (16) au cours de la phase de mise à l'état initial de l'installation de communication, l'affectation d'un chiffre binaire déterminé d'une zone de données de n chiffres binaires apparaissant pendant une tranche de temps se faisant par la transmission du numéro du chiffre binaire concerne.

5. Procédé selon l'une quelconque des revendications précédentes, caractérisé en ce que l'accès au module ou aux modules (18) à fonctions supplémentaires et aux postes terminaux d'abonnés (16) se fait sur la ou sur une des tranches de temps réservées de manière fixe par décodage de celle-ci, en ce que le décodage de la ou d'une des tranches de temps réservées de manière fixe est commandé par le numéro de la tranche de temps transmis et en ce que l'on établit pour le décodage la concordance entre respectivement le numéro de la tranche de temps actuel et le numéro de tranche de temps transmis.

6. Procédé selon la revendication 5, caractérisé en ce que le numéro de tranche de temps actuel respectif est déterminé par le comptage des cadences de réception ou d'émission du cadre d'impulsions actuel respectif.

7. Circuit d'accès pour service de réception ou d'émission afin de mettre en oeuvre un procédé pour l'intégration d'un ou de plusieurs modules (18) à fonctions supplémentaires dans des installations de télécommunication, en particulier dans des installations téléphoniques numériques annexes, dans lequel la transmission entre deux postes terminaux d'abonnés (16) se fait selon le principe du multiplexage temporel par affectation d'une paire de tranches effectuée par une unité de communication centrale (20), caractérisé en ce qu'il est prévu pour le décodage de la tranche ou de l'une des tranches de temps réservées un compteur programmable (40, 42), qui contient un comparateur (48, 50), dont les entrées sont reliées aux sorties d'un registre de mémoire (52, 54) pour le numéro de la tranche de temps transmis et d'un compteur (56, 58) qui est incrémenté par les cadences d'émission ou de réception du cadre d'impulsions respectives actuelles, et en ce qu'il est prévu un premier circuit logique conjonctif (84) aux entrées duquel sont appliqués la cadence d'émission et le signal de sortie du comparateur et à la sortie duquel apparaît le signal de libération de l'émission.

8. Circuit d'accès selon la revendication 7, caractérisé en ce que l'entrée de comptage à rebours (68, 76) du compteur (56, 58) est commandée par le signal de synchronisation d'émission ou de réception de l'installation de télécommunication.

9. Circuit d'accès selon la revendication 7 ou 8, caractérisé en ce que, pour choisir ou affecter un chiffre binaire déterminé d'une zone de données de n chiffre binaires apparaissant pendant une tranche de temps, il est prévu un sélecteur (44, 46) de 1 sur n qui peut être commandé par le numéro de chiffre binaire transmis, sélecteur qui est relié à la sortie d'un second circuit logique conjonctif (86) dont les entrées sont commandées par le signal de sortie du comparateur et par les données d'émission.

10. Circuit d'accès selon les revendications 7 à 9, caractérisé par un troisième circuit logique conjonctif (88) aux entrées duquel la cadence de réception et le signal de sortie du comparateur sont appliqués et à la sortie duquel apparaît le signal de libération de la réception.

11. Circuit d'accès selon l'une des revendications 7 à 10, caractérisé par un quatrième circuit logique conjonctif (90) dont les entrées sont reliées aux sorties du comparateur (50) et du sélecteur 1 sur n (46) et à la sortie duquel apparaissent les données de réception.

Fig. 1

Empfangsbus      Sendebus      Steuerbus

Fig. 2

Fig. 3